# EUROPÄISCHE PATENTANMELDUNG

(11) **EP 4 821 333 A1**
(43) Veröffentlichungstag der Anmeldung: **14.10.2026**
(21) Anmeldenummer: 25170114.0
(22) Anmeldetag: 11.04.2025
(51) Int. Cl.: A01B 59/06

(54) **VERFAHREN ZUR ERMITTLUNG EINES BELEGUNGSZUSTANDS EINES DREIPUNKT-KRAFTHEBERS**

(71) Anmelder: Deere & Company, Moline, IL 61265 (US)
(72) Erfinder: FLEMMING, AXEL, 68163 Mannheim (DE); SCHOTT, FLORIAN, 68163 Mannheim (DE); FRITZ, NORBERT, 68163 Mannheim (DE); STARCK, RICHARD E, 68163 Mannheim (DE)
(74) Vertreter: Dehnhardt, Florian Christopher

(57) **Zusammenfassung**

Die Erfindung betrifft ein Verfahren zur Ermittlung eines Belegungszustands eines Dreipunkt-Krafthebers an einem landwirtschaftlichen Traktor, der zur Aufnahme eines Anbau- oder Zusatzgeräts traktorseitig einen an einer oberen Befestigungsstelle schwenkbar angebrachten Oberlenker sowie an linken und rechten unteren Befestigungsstellen schwenkbar angebrachte linke und rechte Unterlenker umfasst, die sich mittels wenigstens eines hydraulischen Hubzylinders (26a, 26b) durch Betätigung eines Kraftheberventils (40) heben und senken lassen. Hierbei wird von einer Steuereinheit (54) bei Erkennung eines am Kraftheberventil (40) eingestellten konstanten Strömungsquerschnitts mittels eines Stellwegsensors (60) eine an den Unterlenkern auftretende Positionsänderungsgeschwindigkeit bestimmt sowie hinsichtlich einer ermittelten Abweichung von einem für einen unbelegten Zustand der Unterlenker vorgegebenen Normwert bewertet, wobei von der Steuereinheit (54) auf das Vorhandensein eines an den Unterlenkern angebrachten Anbau- oder Zusatzgeräts geschlossen wird, wenn (i) die beim Absenken der Unterlenker auftretende Abweichung betraglich größer ist als ein vorgegebener oberer Grenzwert oder (ii) die beim Anheben der Unterlenker auftretende Abweichung betraglich kleiner ist als ein vorgegebener unterer Grenzwert.

## Beschreibung

Die Erfindung betrifft ein Verfahren zur Ermittlung eines Belegungszustands eines Dreipunkt-Krafthebers an einem landwirtschaftlichen Traktor, der zur Aufnahme eines Anbau- oder Zusatzgeräts traktorseitig einen an einer oberen Befestigungsstelle schwenkbar angebrachten Oberlenker sowie an linken und rechten unteren Befestigungsstellen schwenkbar angebrachte linke und rechte Unterlenker umfasst, die sich mittels wenigstens eines hydraulischen Hubzylinders durch Betätigung eines Kraftheberventils heben und senken lassen.

Insofern ist der Dreipunkt-Kraftheber von herkömmlicher Bauart und kann sich entweder im Heck- oder Frontbereich des landwirtschaftlichen Traktors befinden. Dabei erlauben am Oberlenker sowie an den Unterlenkern vorgesehene Schnellfanghaken ein Einrasten entsprechender Kupplungsstellen am Anbau- oder Zusatzgerät.

Das Vorhandensein eines am Dreipunkt-Kraftheber angebrachten Anbau- oder Zusatzgeräts nimmt maßgeblichen Einfluss auf das Fahrverhalten wie auch die Reifenaufstandskräfte des landwirtschaftlichen Traktors. Dies trifft vor allem dann zu, wenn das Anbau- oder Zusatzgerät außer Kontakt mit dem Untergrund steht. Dies ist naturgemäß bei frei getragenen Geräten bzw. Zusatzgewichten der Fall, aber auch bei bodeneingreifenden Geräten, sofern sich diese in der zum Transport vorgesehenen angehobenen Position der Unterlenker befinden. Die Kenntnis des aktuellen Belegungszustands des Dreipunkt-Krafthebers ist insoweit für den Betrieb einer Fahrdynamikregelung, einer Reifendruckregelanlage oder dergleichen von besonderem Interesse.

Angesichts dessen ist es Aufgabe, ein Verfahren der eingangs genannten Art anzugeben, das eine fahrerunabhängige Erkennung eines an einem Dreipunkt-Kraftheber angebrachten Anbau- oder Zusatzgeräts erlaubt.

Diese Aufgabe wird durch ein Verfahren zur Ermittlung eines Belegungszustands eines Dreipunkt-Krafthebers an einem landwirtschaftlichen Traktor mit den Merkmalen des Patentanspruchs 1 gelöst.

Bei einem erfindungsgemäßen Verfahren zur Ermittlung eines Belegungszustands eines Dreipunkt-Krafthebers an einem landwirtschaftlichen Traktor umfasst der Dreipunkt-Kraftheber zur Aufnahme eines Anbau- oder Zusatzgeräts traktorseitig einen an einer oberen Befestigungsstelle schwenkbar angebrachten Oberlenker sowie an linken und rechten unteren Befestigungsstellen schwenkbar angebrachte linke und rechte Unterlenker, die sich mittels wenigstens eines hydraulischen Hubzylinders durch Betätigung eines Kraftheberventils heben und senken lassen. Hierbei wird von einer Steuereinheit bei Erkennung eines am Kraftheberventil eingestellten konstanten Strömungsquerschnitts mittels eines Stellwegsensors eine an den Unterlenkern auftretende Positionsänderungsgeschwindigkeit bestimmt sowie hinsichtlich einer ermittelten Abweichung von einem für einen unbelegten Zustand der Unterlenker vorgegebenen Normwert bewertet, wobei von der Steuereinheit auf das Vorhandensein eines an den Unterlenkern angebrachten Anbau- oder Zusatzgeräts geschlossen wird, wenn (i) die beim Absenken der Unterlenker auftretende Abweichung betraglich größer ist als ein vorgegebener oberer Grenzwert oder (ii) die beim Anheben der Unterlenker auftretende Abweichung betraglich kleiner ist als ein vorgegebener unterer Grenzwert.

Mit anderen Worten werden Betriebszustände des Dreipunkt-Krafthebers zur Messung der an den Unterlenkern auftretenden Absenk- oder Anhebegeschwindigkeit genutzt, in denen der wenigstens eine hydraulische Hubzylinder ohne wesentliche Änderung des am Kraftheberventil eingestellten Strömungsquerschnitts ein- oder ausgefahren wird. Dies ist beispielsweise beim Absenken der Unterlenker aus einer angehobenen Transportstellung in ein abgesenkte Arbeitsstellung und umgekehrt der Fall. Die an den Unterlenkern auftretende Absenk- oder Anhebegeschwindigkeit ergibt sich hierbei aus einer mittels des Stellwegsensors erfassten zeitlichen Änderung der Unterlenkerstellung oder einer damit in eindeutigem Zusammenhang stehenden Ersatzgröße. Bei letzterer kann es sich beispielsweise um den Ausfahrzustand des wenigstens einen hydraulischen Hubzylinders handeln.

So führt das Gewicht eines an dem Unterlenkern eingehängten Anbau- oder Zusatzgeräts im Bereich mehrerer Zentner bis zu mehr als einer Tonne im ersten Fall (i) zu einer Erhöhung der Absenkgeschwindigkeit und im zweiten Fall (ii) zu einer Verringerung der Anhebegeschwindigkeit im Vergleich zu einem unbelegten bzw. lastlosen Zustand der Unterlenker. Eine gegenüber dem insofern vorgegebenen Normwert auftretende Abweichung lässt somit unter der Voraussetzung eines während des Messvorgangs gleichbleibenden Strömungsquerschnitts am Kraftheberventil eine zumindest qualitative Aussage hinsichtlich des Vorhandenseins eines Anbau- oder Zusatzgeräts am Dreipunkt-Kraftheber zu. Diese Information kann beispielsweise genutzt werden, um eine geeignete Anpassung gewichtsabhängiger Betriebsparameter entsprechender Fahrzeugsysteme, wie einer Fahrdynamikregelung, einer Reifendruckregelanlage oder dergleichen, vorzunehmen. Hierbei spielt es keine Rolle, ob der wenigstens eine hydraulische Hubzylinder einfachwirkend oder doppeltwirkend ausgebildet ist.

Die Vorgabe des Normwerts kann seitens der Steuereinheit variabel erfolgen, um sensorisch erfassten Änderungen der Druckverhältnisse am Kraftheberventil entsprechend Rechnung tragen zu können. Dies ist insbesondere beim Anheben der Unterlenker durch Ausfahren des wenigstens einen hydraulischen Hubzylinders von Bedeutung, vor allem dann, wenn die Druckbeaufschlagung des wenigstens einen hydraulischen Hubzylinders seitens einer Hochdruckpumpe mit variablem Fördervolumenstrom als Bestandteil eines sog. Loadsensing-Hydrauliksystems erfolgt. Je nach Lastanforderung weiterer von der Hochdruckpumpe gespeister hydraulischer Verbraucher kann der durch das Kraftheberventil hindurchtretende Volumenstrom gewissen Schwankungen unterworfen sein, die sich in einer veränderten Ausfahrgeschwindigkeit des wenigstens einen hydraulischen Hubzylinders äußern und letztlich eine entsprechende Angleichung des Normwerts notwendig machen.

Vorteilhafte Weiterbildungen des erfindungsgemäßen Verfahrens gehen aus den Unteransprüchen hervor.

Um eine durch beschleunigungsbedingte Fremdeinflüsse verursachte fehlerbehaftete Erfassung der Positionsänderungsgeschwindigkeit an den Unterlenkern auszuschließen, kann vorgesehen sein, dass der Belegungszustand von der Steuereinheit ausschließlich dann ermittelt wird, wenn durch Auswertung von über ein Datenkommunikationssystem bereitgestellten Fahrt- und/oder Betriebszustandsinformationen erkannt wird, dass der landwirtschaftliche Traktor auf im Wesentlichen neigungsfreiem Untergrund eine Geradeausfahrt mit konstanter Fahrtgeschwindigkeit ausführt oder darauf stillsteht. Das Vorliegen einer Geradeausfahrt ist unter anderem aufgrund eines an lenkbaren Rädern des landwirtschaftlichen Traktors eingestellten Radlenkwinkels erkennbar, wohingegen eine Beurteilung der Fahrtgeschwindigkeit durch sensorische Erfassung und Auswertung der an zugehörigen Rädern des landwirtschaftlichen Traktors auftretenden Raddrehzahlen erfolgen kann. Die betreffenden Fahrt- und/oder Betriebszustandsinformationen stehen der Steuereinheit hierbei üblicherweise an dem als CAN-Bus ausgebildeten Datenkommunikationssystem des landwirtschaftlichen Traktors zur Verfügung.

Vor diesem Hintergrund ist es auch denkbar, dass von der Steuereinheit eine bereits begonnene Ermittlung des Belegungszustands abgebrochen wird, sofern von dieser durch Auswertung der über das Datenkommunikationssystem bereitgestellten Fahrt- und/oder Betriebszustandsinformationen erkannt wird, dass eine über einen zulässigen Toleranzbereich hinausgehende Veränderung der Fahrtgeschwindigkeit, der Fahrtrichtung oder der Neigung des Untergrunds auftritt. Entsprechendes gilt für den Fall, dass sich der am Kraftheberventil eingestellte Strömungsquerschnitt ändert bzw. eine dementsprechende fahrerseitige Bedienhandlung mit der Absicht einer abweichenden Betätigung des Dreipunkt-Krafthebers erkannt wird.

Hierbei können von der Steuereinheit zur Beurteilung der Neigung des Untergrunds sensorisch erfasste Neigungsinformationen und/oder Topografieinformationen eines in dem landwirtschaftlichen Traktor fest verbauten bzw. als mobiles Endgerät ausgebildeten Navigationssystems als Bestandteil der Fahrt- und/oder Betriebszustandsinformationen ausgewertet werden. Die Topografieinformationen liegen üblicherweise in Form kartografischer Daten in einer mit dem Navigationssystem kommunizierenden Speichereinheit vor, wohingegen die Bereitstellung der Neigungsinformationen auch mittels einer dem Traktorchassis zugeordneten Inertialen Messeinheit (IMU) oder dergleichen erfolgen kann. Die Topografie- und/oder Neigungsinformationen können an die Steuereinheit dann ebenfalls über das Datenkommunikationssystem bzw. den CAN-Bus des landwirtschaftlichen Traktors übertragen werden.

Die Ermittlung des Belegungszustands kann von der Steuereinheit selbsttätig bei Inbetriebnahme des landwirtschaftlichen Traktors, bei erkanntem Erreichen eines Vorgewendes während der Feldbearbeitung, periodisch nach Ablauf einer vorgegebenen Zeitspanne und/oder manuell über eine Nutzerschnittstelle initiiert werden. Das Erreichen eines Vorgewendes wird beispielsweise von einem Vorgewendemanagementsystem erkannt, wie es das sog. iTEC-System des Herstellers John Deere darstellt.

Im Sinne einer Reduzierung möglicher Messfehler kann vorgesehen sein, dass die Ermittlung der gegenüber dem vorgegebenen Normwert auftretenden Abweichung auf einen linearen Bereich konstanter Positionsänderungsgeschwindigkeit begrenzt wird. Um den linearen Bereich zu vergrößern, können mögliche Einflüsse, die sich aufgrund von Nichtlinearitäten zwischen Ausfahrzustand und Verfahrgeschwindigkeit des wenigstens einen hydraulischen Hubzylinders ergeben, von der Steuereinheit durch Anwendung einer für das betreffende Hubzylindermodell bestimmten Korrekturfunktion kompensiert werden.

Um hinsichtlich der Gewichtsverhältnisse eines an den Unterlenkern angebrachten Anbau- oder Zusatzgeräts eine über dessen bloßes Vorhandensein hinausgehende Aussage treffen zu können, besteht die Möglichkeit, dass von der Steuereinheit unter Einbeziehung der als bekannt vorausgesetzten Geometrie bzw. Hebelverhältnisse des Dreipunkt-Krafthebers nach Maßgabe sensorisch bereitgestellter Zugkraftinformationen, die eine an wenigstens einer der beiden unteren Befestigungsstellen über die Unterlenker ausgebübte Lasteinwirkung wiedergeben, ausgehend von einer darauf beruhenden Abschätzung der Schwerpunktlage eine Kategorisierung des Gewichts eines daran angebrachten Anbau- oder Zusatzgeräts durchgeführt wird. Die Kenntnis der Schwerpunktlage bzw. des ungefähren Gewichts des Anbau- oder Zusatzgeräts erlaubt es, eine verfeinerte Anpassung der gewichtsabhängigen Betriebsparameter der entsprechenden Fahrzeugsysteme des landwirtschaftlichen Traktors vorzunehmen. Die Kategorisierung kann in groben Klassen wie "leicht", "mittel" und "schwer" erfolgen. Darüber hinaus kann von der Steuereinheit unter Einbeziehung der als bekannt vorausgesetzten Hebelverhältnisse des Dreipunkt-Krafthebers nach Maßgabe sensorisch bereitgestellter Zugkraftinformationen, die eine an wenigstens einer der beiden unteren Befestigungsstellen über die Unterlenker ausgebübte Lasteinwirkung wiedergeben, ausgehend von einer darauf beruhenden Abschätzung der Schwerpunktlage in Verbindung mit Informationen hinsichtlich einer aktuellen Oberlenkerlänge eine betragsmäßige Ermittlung des Gewichts des Anbau- oder Zusatzgeräts durchgeführt werden. So lässt sich der Oberlenker in der Regel mechanisch mittels einer Gewindespindel oder hydraulisch in seiner Länge zwischen der oberen Befestigungsstelle am landwirtschaftlichen Traktor und dem Schnellfanghaken verändern, um die Neigung eines daran angebrachten Anbau- oder Zusatzgeräts variieren zu können. Dies hat wiederum entsprechende Auswirkungen auf die Hebelverhältnisse am Dreipunkt-Kraftheber. Die insofern an die Steuereinheit zu übermittelnden Informationen können entweder manuell über die Nutzerschnittstelle eingegeben oder aber mittels eines Positionssensors unmittelbar am Oberlenker erfasst werden. Eine solche Möglichkeit ist bei hydraulisch längenverstellbaren Oberlenkern gängiger Bauart meist ohnedies gegeben.

Die sensorische Bereitstellung der Zugkraftinformationen erfolgt zum Beispiel mittels eines Kraftmessbolzens. Dieser dient zugleich der schwenkbaren Lagerung des zugehörigen Unterlenkers innerhalb der unteren Befestigungsstelle am landwirtschaftlichen Traktor.

Das erfindungsgemäße Verfahren zur Ermittlung eines Belegungszustands eines Dreipunkt-Krafthebers an einem landwirtschaftlichen Traktor wird im Folgenden anhand der beigefügten Zeichnungen näher erläutert. Dabei sind hinsichtlich ihrer Funktion übereinstimmende bzw. vergleichbare Komponenten bzw. Baugruppen mit denselben Bezugszeichen gekennzeichnet. Es zeigen:
- Fig. 1: ein als Blockdiagramm dargestelltes Ausführungsbeispiel des erfindungsgemäßen Verfahrens zur Ermittlung eines Belegungszustands eines Dreipunkt-Krafthebers an einem landwirtschaftlichen Traktor,
- Fig. 2a: eine rückwärtige Ansicht eines mit einem Dreipunkt-Kraftheber ausgestatteten landwirtschaftlichen Traktors,
- Fig. 2b: eine von dem landwirtschaftlichen Traktor umfasste Anordnung zur Ausführung des in Fig. 1 wiedergegebenen Verfahrens, und
- Fig. 3: einen beispielhaften Verlauf der Unterlenkerstellung bzw. eines Steuersignals zur Betätigung eines zur Veränderung der Unterlenkerstellung vorgesehenen Kraftheberventils jeweils in Abhängigkeit der Zeit beim Absenken der Unterlenker.

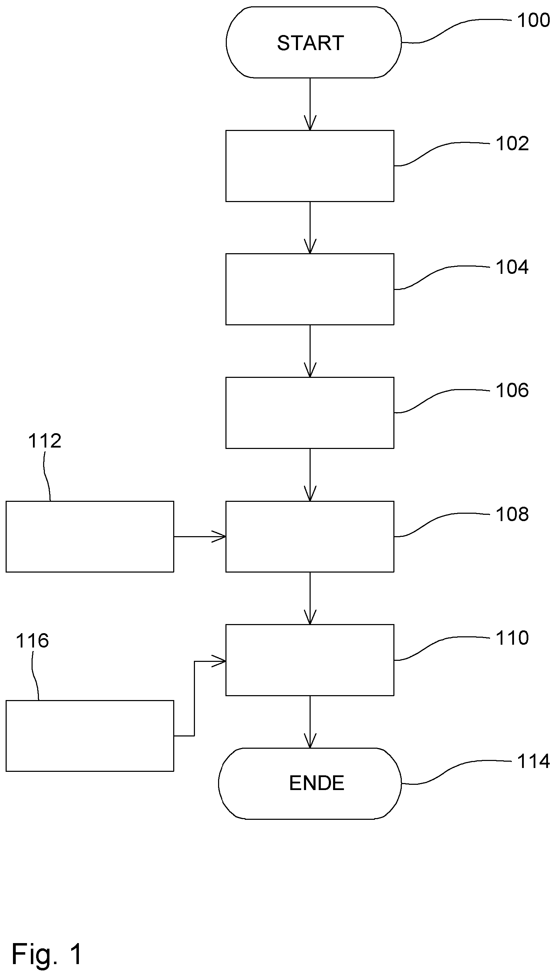

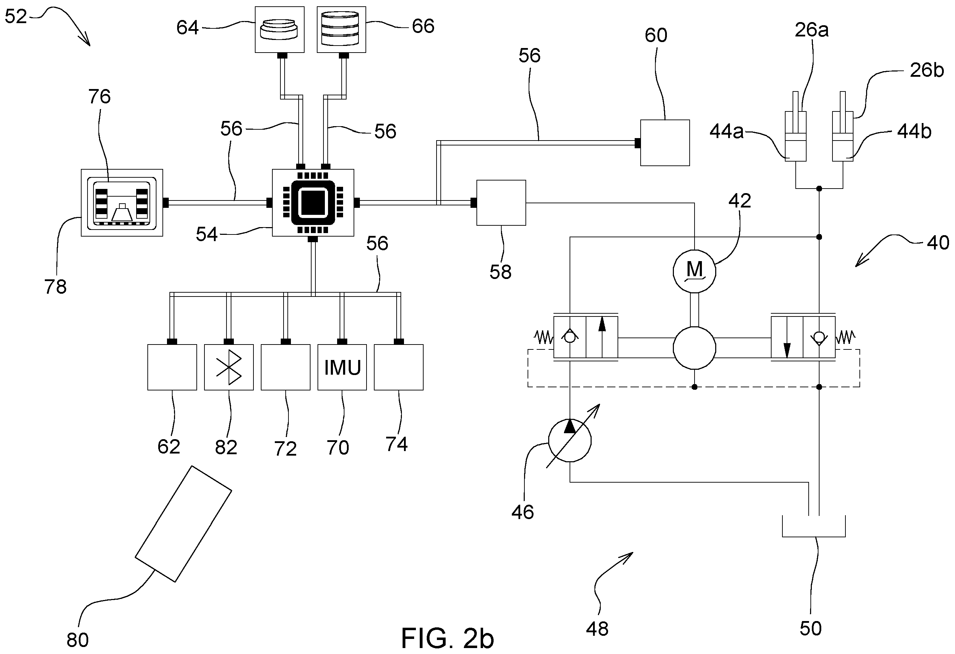

Fig. 1 zeigt ein als Blockdiagramm dargestelltes Ausführungsbeispiel des erfindungsgemäßen Verfahrens zur Ermittlung eines Belegungszustands eines Dreipunkt-Krafthebers an einem landwirtschaftlichen Traktor, wobei zunächst auf die zu dessen Ausführung vorgesehene Anordnung gemäß Fig. 2b eingegangen werden soll.

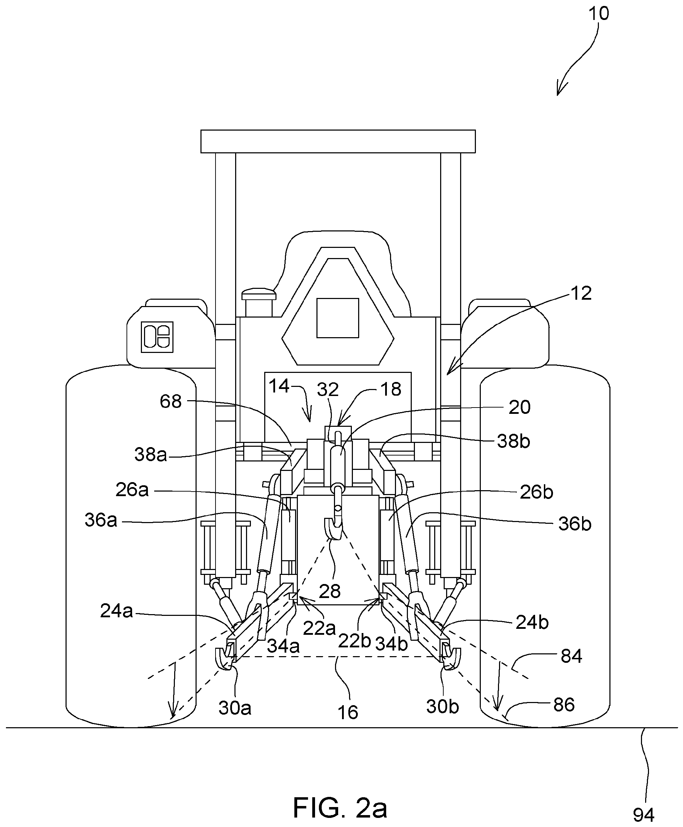

Der in diesem Zusammenhang in Fig. 2a wiedergegebene landwirtschaftliche Traktor 10 ist von herkömmlicher Bauart und weist zumindest im Heckbereich 12 (wahlweise auch im Frontbereich) einen Dreipunkt-Kraftheber 14 auf, der zur Aufnahme eines Anbau- oder Zusatzgeräts 16 (nicht gezeigt) traktorseitig einen an einer oberen Befestigungsstelle 18 schwenkbar angebrachten Oberlenker 20 sowie an linken und rechten unteren Befestigungsstellen 22a, 22b schwenkbar angebrachte linke und rechte Unterlenker 24a, 24b umfasst, die sich mittels hydraulischer Hubzylinder 26a, 26b heben und senken lassen. Am Oberlenker 20 sowie an den Unterlenkern 24a, 24b vorgesehene Schnellfanghaken 28, 30a, 30b erlauben ein Einrasten entsprechender Kupplungsstellen am Anbau- oder Zusatzgerät 16.

Genauer gesagt sind der Oberlenker 20 wie auch die beiden Unterlenker 24a, 24b im Bereich ihrer Befestigungsstellen 18, 22a, 22b an ihrem traktorseitigen Ende mittels zugehöriger Kugelgelenke 32, 34a, 34b sowohl in horizontaler als auch vertikaler Richtung schwenkbar angebracht. Die Unterlenker 24a, 24b sind über zugehörige Hubstreben 36a, 36b mit Hubarmen 38a, 38b verbunden, die sich zum Heben und Senken der Unterlenker 24a, 24b mittels der hydraulischen Hubzylinder 26a, 26b verschwenken lassen.

Entsprechend der Darstellung in Fig. 2a bzw. 2b sind die hydraulischen Hubzylinder 26a, 26b einfachwirkend ausgebildet, diese können jedoch auch eine doppeltwirkend ausgebildet sein.

Zum gezielten Ein- und Ausfahren der hydraulischen Hubzylinder 26a, 26b und damit zum Heben und Senken der Unterlenker 24a, 24b dient ein Kraftheberventil 40, das mittels eines elektromotorischen Antriebs 42 zwischen einer druckbeaufschlagenden Stellung A, in der die Arbeitskammern 44a, 44b der hydraulischen Hubzylinder 26a, 26b mit einer Hochdruckpumpe 46 mit variablem Fördervolumenstrom eines Loadsensing-Hydrauliksystems 48 des landwirtschaftlichen Traktors 10 verbindbar sind, und einer druckentlastenden Stellung B zur Herstellung einer Rücklaufverbindung mit einem Reservoir 50 umschaltbar ist. Typischerweise sind neben dem Kraftheberventil 40 weitere (Hydraulik-) Komponenten, wie beispielsweise ein Druckregelventil, Druckbegrenzungsventil, Rückschlagventile oder dergleichen, vorhanden, diese sind jedoch aus Gründen der Übersichtlichkeit in Fig. 2b weggelassen.

Wie ferner in Fig. 2b zu erkennen ist, umfasst die in eine übergeordnete Steuergerätearchitektur des landwirtschaftlichen Traktors 10 integrierte Anordnung 52 eine elektronische Steuereinheit 54, die über ein als CAN-Bus 56 ausgebildetes Datenkommunikationssystem mit einer Ventilsteuerung 58 zur Betätigung des von dem Kraftheberventil 40 umfassten elektromotorischen Antriebs 42, einem Stellwegsensor 60 zur Erfassung der Unterlenkerstellung α bzw. eines damit korrespondierenden Ausfahrzustands s der hydraulischen Hubzylinder 26a, 26b, einem Radlenkwinkelsensor 62 zur Erfassung eines an lenkbaren Rädern des landwirtschaftlichen Traktors 10 eingestellten Radlenkwinkels, einer Vielzahl von Raddrehzahlsensoren 62 zur Erfassung der an zugehörigen Rädern des landwirtschaftlichen Traktors 10 auftretenden Raddrehzahlen, eines Navigationssystems 64 zur Bereitstellung von Topografieinformationen, die in Form kartografischer Daten in einer mit dem Navigationssystem 64 kommunizierenden Speichereinheit 66 abgelegt sind, einer dem Traktorchassis 68 zugeordneten Inertialen Messeinheit (IMU) 70, einem Kraftmessbolzen 72 zur sensorischen Bereitstellung von Zugkraftinformationen an wenigstens einer der beiden unteren Befestigungsstellen 22a, 22b, einem (optionalen) Positionssensor 74 zur Bereitstellung von Informationen hinsichtlich einer aktuellen Oberlenkerlänge l, und einer als berührungsempfindliches Display 76 ausgebildeten Nutzerschnittstelle 78. Das Navigationssystem 64 ist entweder in dem landwirtschaftlichen Traktor 10 fest verbaut oder aber als mobiles Endgerät 80 ausgebildet, wobei letzteres über eine Bluetooth-Schnittstelle 82 drahtlos mit der Steuereinheit 54 kommuniziert. Alternativ kann anstelle der Bluetooth-Schnittstelle 82 zur drahtlosen Datenübertragung auch eine WLAN-Schnittstelle oder dergleichen vorgesehen sein.

Der Kraftmessbolzen 72 dient zugleich der schwenkbaren Lagerung des zugehörigen Unterlenkers 24a, 24b innerhalb der unteren Befestigungsstelle 22a, 22b am landwirtschaftlichen Traktor 10, sodass die Zugkraftinformationen dementsprechend eine an der unteren Befestigungsstelle 22a, 22b über den Unterlenker 24a, 24b ausgebübte Lasteinwirkung wiedergeben.

Das in Fig. 1 schematisch wiedergegebene und als entsprechender Programmcode in einem (nicht gezeigten) Arbeitsspeicher der Steuereinheit 54 hinterlegte Verfahren wird in einem Startschritt 100 selbsttätig bei Inbetriebnahme des landwirtschaftlichen Traktors 10 initialisiert. Abweichend davon ist es auch möglich, dass die Initialisierung im Startschritt 100 bei erkanntem Erreichen eines Vorgewendes während der Feldbearbeitung, periodisch nach Ablauf einer vorgegebenen Zeitspanne und/oder manuell über die Nutzerschnittstelle 78 erfolgt. Das Erreichen eines Vorgewendes wird beispielsweise von einem Vorgewendemanagementsystem erkannt, wie es das sog. iTEC-System des Herstellers John Deere darstellt.

Anschließend wird in einem ersten Hauptschritt 102 mit der eigentlichen fahrerunabhängigen Ermittlung des Belegungszustands des Dreipunkt-Krafthebers 14 fortgefahren, in dem von der Steuereinheit 54 bei Erkennung eines am Kraftheberventil 40 eingestellten konstanten Strömungsquerschnitts in einem zweiten Hauptschritt 104 mittels des Stellwegsensors 60 eine an den Unterlenkern 24a, 24b auftretende Positionsänderungsgeschwindigkeit bestimmt wird. Dies ist beispielsgemäß beim Absenken der Unterlenker 24a, 24b aus einer angehobenen Transportstellung 84 in ein abgesenkte Arbeitsstellung 86 und umgekehrt der Fall. Die an den Unterlenkern 24a, 24b auftretende Absenk- oder Anhebegeschwindigkeit ergibt sich hierbei aus einer mittels des Stellwegsensors 60 erfassten zeitlichen Änderung der Unterlenkerstellung α oder dem Ausfahrzustand s der hydraulischen Hubzylinder 26a, 26b.

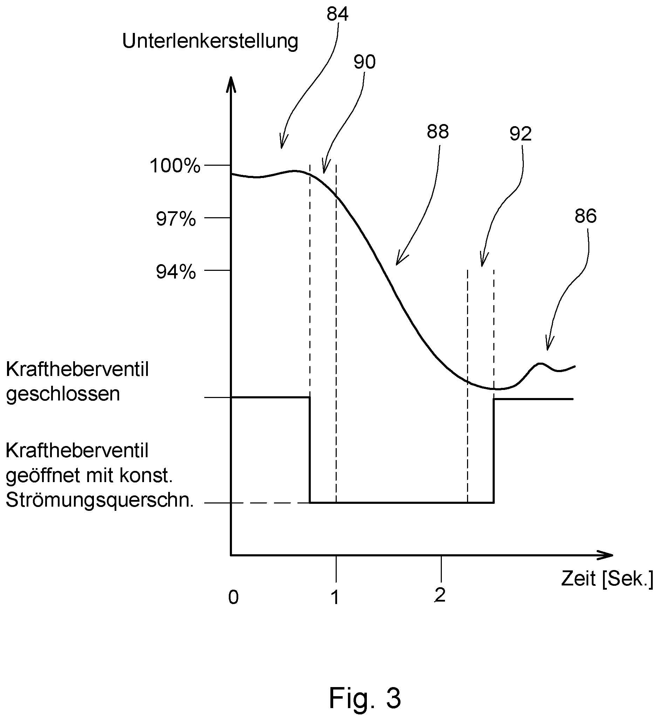

Die mittels des Stellwegsensors 60 auftretende Positionsänderungsgeschwindigkeit wird von der Steuereinheit 54 in einem dritten Hauptschritt 106 hinsichtlich einer ermittelten Abweichung von einem für einen unbelegten Zustand der Unterlenker 24a, 24b vorgegebenen Normwert bewertet bzw. verglichen. Ein typischer Verlauf der Unterlenkerstellung α bzw. des Ausfahrzustands s sowie eines zur Betätigung des elektromotorischen Antriebs 42 des Kraftheberventils 40 von der Steuereinheit 54 erzeugten Steuersignals CURRENT ist in Fig. 3 jeweils in Abhängigkeit der Zeit t beispielhaft für das Absenken der beiden Unterlenker 24a, 24b aus der angehobenen Transportstellung 84 in die abgesenkte Arbeitsstellung 86 veranschaulicht.

Im Sinne einer Reduzierung möglicher Messfehler wird die Ermittlung der gegenüber dem vorgegebenen Normwert auftretenden Abweichung im dritten Hauptschritt 106 auf einen linearen Bereich 88 konstanter Positionsänderungsgeschwindigkeit begrenzt. In den Randbereichen 90, 92 liegende Nichtlinearitäten beim Öffnen und Schließen des Kraftheberventils 40 werden so ausgeblendet.

Um den linearen Bereich 88 zu vergrößern, werden mögliche Einflüsse, die sich aufgrund von Nichtlinearitäten zwischen Ausfahrzustand s und Verfahrgeschwindigkeit ds/dt der hydraulischen Hubzylinder 26a, 26b ergeben, von der Steuereinheit 54 im dritten Hauptschritt 106 durch Anwendung einer für das betreffende Hubzylindermodell bestimmten und in der Speichereinheit 66 als quadratische Funktion oder Lookup-Tabelle hinterlegten Korrekturfunktion kompensiert.

Von der Steuereinheit 54 wird in einem vierten Hauptschritt 108 auf das Vorhandensein des an den Unterlenkern 24a, 24b angebrachten Anbau- oder Zusatzgeräts 16 geschlossen, wenn sich im dritten Hauptschritt 106 ergibt, dass (i) die beim Absenken der Unterlenker 24a, 24b auftretende Abweichung betraglich größer ist als ein vorgegebener oberer Grenzwert oder (ii) die beim Anheben der Unterlenker 24a, 24b auftretende Abweichung betraglich kleiner ist als ein vorgegebener unterer Grenzwert.

Mit anderen Worten werden die beiden hydraulischen Hubzylinder 26a, 26b gezielt ein- oder ausgefahren sowie die hierbei auftretende Absenk- oder Anhebegeschwindigkeit der Unterlenker 24a, 24b gemessen. Letztere ergibt sich aus der von der Steuereinheit 54 ermittelten zeitlichen Änderung der mittels des Stellwegsensors 60 erfassten Unterlenkerstellung α bzw. der damit korrespondierenden zeitlichen Änderung des Ausfahrzustands s der hydraulischen Hubzylinder 26a, 26b.

Optional erfolgt die Vorgabe des Normwerts im dritten Hauptschritt 106 seitens der Steuereinheit 54 variabel, mit dem Ziel, sensorisch erfassten Änderungen der Druckverhältnisse am Kraftheberventil 40 entsprechend Rechnung zu tragen. Dies ist vorrangig beim Anheben der Unterlenker 24a, 24b durch Ausfahren der hydraulischen Hubzylinder 26a, 26b von Bedeutung, da die Druckbeaufschlagung der Arbeitskammern 44a, 44b seitens der Hochdruckpumpe 46 mit variablem Fördervolumenstrom als Bestandteil des Loadsensing-Hydrauliksystems 48 erfolgt. Je nach Lastanforderung weiterer von der Hochdruckpumpe 46 gespeister hydraulischer Verbraucher kann der durch das Kraftheberventil 40 hindurchtretende Volumenstrom daher gewissen Schwankungen unterworfen sein, die sich in einer veränderten Ausfahrgeschwindigkeit ds/dt der hydraulischen Hubzylinder 26a, 26b äußern und letztlich eine entsprechende Angleichung des Normwerts notwendig machen. Die sensorische Erfassung der durch den Förderdruck der Hochdruckpumpe 46 gegebenen Druckverhältnisse am Kraftheberventil 40 ist Bestandteil des Loadsensing-Hydrauliksystems 48 und daher in Fig. 2b nicht eigens wiedergegeben.

Dem erfindungsgemäßen Verfahren liegt die Erkenntnis zugrunde, dass das Gewicht des an den Unterlenkern 24a, 24b eingehängten Anbau- oder Zusatzgeräts 16 im Bereich mehrerer Zentner bis zu mehr als einer Tonne im ersten Fall (i) zu einer Erhöhung der Absenkgeschwindigkeit und im zweiten Fall (ii) zu einer Verringerung der Anhebegeschwindigkeit im Vergleich zu einem unbelegten bzw. lastlosen Zustand der Unterlenker 24a, 24b führt. Eine gegenüber dem insofern vorgegebenen Normwert auftretende Abweichung lässt somit unter der Voraussetzung eines während des Messvorgangs gleichbleibenden Strömungsquerschnitts am Kraftheberventil 40 eine zumindest qualitative Aussage hinsichtlich des Vorhandenseins des Anbau- oder Zusatzgeräts 16 am Dreipunkt-Kraftheber 14 zu. Diese Information wird beispielsgemäß in einem fünften Hauptschritt 110 genutzt, um eine geeignete Anpassung gewichtsabhängiger Betriebsparameter entsprechender Fahrzeugsysteme, wie einer Fahrdynamikregelung, einer Reifendruckregelanlage oder dergleichen, vorzunehmen.

Danach wird das erfindungsgemäße Verfahren in einem Schlussschritt 114 beendet.

Um eine durch beschleunigungsbedingte Fremdeinflüsse verursachte fehlerbehaftete Erfassung der Positionsänderungsgeschwindigkeit an den Unterlenkern 24a, 24b auszuschließen, ist vorgesehen, dass der Belegungszustand von der Steuereinheit 54 im vierten Hauptschritt 108 ausschließlich dann ermittelt wird, wenn in einem ersten Nebenschritt 112 durch Auswertung von über den CAN-Bus 56 bereitgestellten Fahrt- und/oder Betriebszustandsinformationen erkannt wird, dass der landwirtschaftliche Traktor 10 auf im Wesentlichen neigungsfreiem Untergrund 94 eine Geradeausfahrt mit konstanter Fahrtgeschwindigkeit ausführt oder darauf stillsteht. Zur Beurteilung der Neigung des Untergrunds 94 werden von der Steuereinheit 54 als Bestandteil der Fahrt- und/oder Betriebszustandsinformationen sensorisch erfasste Neigungsinformationen, die seitens der Inertialen Messeinheit 70 bereitgestellt werden, und/oder der Topografieinformationen des Navigationssystems 64 ausgewertet.

Entsprechendes gilt für den Fall, dass von der Steuereinheit 54 im ersten Nebenschritt 112 durch Auswertung der über den CAN-Bus 56 bereitgestellten Fahrt- und/oder Betriebszustandsinformationen erkannt wird, dass eine über einen zulässigen Toleranzbereich hinausgehende Veränderung der Fahrtgeschwindigkeit, der Fahrtrichtung oder der Neigung des Untergrunds 94 auftritt. Eine im vierten Hauptschritt 108 bereits begonnene Ermittlung des Belegungszustands wird dann abgebrochen, wobei das erfindungsgemäße Verfahren unmittelbar im Schlussschritt 114 beendet wird. Entsprechendes gilt für den Fall, dass sich der am Kraftheberventil 40 eingestellte Strömungsquerschnitt ändert bzw. eine über die Nutzerschnittstelle 78 ausgeübte fahrerseitige Bedienhandlung mit der Absicht einer abweichenden Betätigung des Dreipunkt-Krafthebers 14 erkannt wird.

Um hinsichtlich der Gewichtsverhältnisse des an den Unterlenkern 24a, 24b angebrachten Anbau- oder Zusatzgeräts 16 eine über dessen bloßes Vorhandensein hinausgehende Aussage treffen zu können, wird in einem optionalen zweiten Nebenschritt 116 von der Steuereinheit 54 unter Einbeziehung der als bekannt vorausgesetzten Geometrie bzw. Hebelverhältnisse des Dreipunkt-Krafthebers 14 nach Maßgabe der sensorisch bereitgestellten Zugkraftinformationen ausgehend von einer darauf beruhenden Abschätzung der Schwerpunktlage eine Kategorisierung des Gewichts des daran angebrachten Anbau- oder Zusatzgeräts 16 durchgeführt. Die Kenntnis der Schwerpunktlage bzw. des ungefähren Gewichts des Anbau- oder Zusatzgeräts 16 erlaubt es, eine verfeinerte Anpassung der gewichtsabhängigen Betriebsparameter der entsprechenden Fahrzeugsysteme des landwirtschaftlichen Traktors 10 vorzunehmen. Die Kategorisierung erfolgt in groben Klassen wie "leicht", "mittel" und "schwer".

Dies kann hinsichtlich einer betragsmäßigen Ermittlung des Gewichts des Anbau- oder Zusatzgeräts 16 erweitert werden. Hierzu bezieht die Steuereinheit 54 zusätzlich die über den CAN-Bus 56 bereitgestellten Informationen der aktuellen Oberlenkerlänge l mit ein. So lässt sich der Oberlenker 20 in der Regel mechanisch mittels einer Gewindespindel oder hydraulisch in seiner Länge zwischen der oberen Befestigungsstelle 18 am landwirtschaftlichen Traktor 10 und dem Schnellfanghaken 28 verändern, um die Neigung eines daran angebrachten Anbau- oder Zusatzgeräts 16 variieren zu können. Dies hat wiederum entsprechende Auswirkungen auf die Hebelverhältnisse am Dreipunkt-Kraftheber 14. Die insofern an die Steuereinheit 54 zu übermittelnden Informationen werden entweder manuell über die Nutzerschnittstelle 78 eingegeben oder aber mittels des Positionssensors 74 unmittelbar am Oberlenker 20 erfasst. Eine solche Möglichkeit ist bei hydraulisch längenverstellbaren Oberlenkern gängiger Bauart meist ohnedies gegeben.

## Patentansprüche

1. Verfahren zur Ermittlung eines Belegungszustands eines Dreipunkt-Krafthebers an einem landwirtschaftlichen Traktor, bei dem der Dreipunkt-Kraftheber (14) zur Aufnahme eines Anbau- oder Zusatzgeräts (16) traktorseitig einen an einer oberen Befestigungsstelle (18) schwenkbar angebrachten Oberlenker (20) sowie an linken und rechten unteren Befestigungsstellen (22a, 22b) schwenkbar angebrachte linke und rechte Unterlenker (24a, 24b) umfasst, die sich mittels wenigstens eines hydraulischen Hubzylinders (26a, 26b) durch Betätigung eines Kraftheberventils (40) heben und senken lassen. Hierbei wird von einer Steuereinheit (54) bei Erkennung eines am Kraftheberventil (40) eingestellten konstanten Strömungsquerschnitts mittels eines Stellwegsensors (60) eine an den Unterlenkern (24a, 24b) auftretende Positionsänderungsgeschwindigkeit bestimmt sowie hinsichtlich einer ermittelten Abweichung von einem für einen unbelegten Zustand der Unterlenker (24a, 24b) vorgegebenen Normwert bewertet, wobei von der Steuereinheit (54) auf das Vorhandensein eines an den Unterlenkern (24a, 24b) angebrachten Anbau- oder Zusatzgeräts (16) geschlossen wird, wenn (i) die beim Absenken der Unterlenker (24a, 24b) auftretende Abweichung betraglich größer ist als ein vorgegebener oberer Grenzwert oder (ii) die beim Anheben der Unterlenker (24a, 24b) auftretende Abweichung betraglich kleiner ist als ein vorgegebener unterer Grenzwert.

2. Verfahren nach Anspruch 1, **dadurch gekennzeichnet, dass** der Belegungszustand von der Steuereinheit (54) ausschließlich dann ermittelt wird, wenn durch Auswertung von über ein Datenkommunikationssystem (56) bereitgestellten Fahrt- und/oder Betriebszustandsinformationen erkannt wird, dass der landwirtschaftliche Traktor (10) auf im Wesentlichen neigungsfreiem Untergrund (94) eine Geradeausfahrt mit konstanter Fahrtgeschwindigkeit ausführt oder darauf stillsteht.

3. Verfahren nach Anspruch 1 oder 2, **dadurch gekennzeichnet, dass** von der Steuereinheit (54) eine bereits begonnene Ermittlung des Belegungszustands abgebrochen wird, sofern von dieser durch Auswertung der über das Datenkommunikationssystem (56) bereitgestellten Fahrt- und/oder Betriebszustandsinformationen erkannt wird, dass eine über einen zulässigen Toleranzbereich hinausgehende Veränderung der Fahrtgeschwindigkeit, der Fahrtrichtung oder der Neigung des Untergrunds (94) auftritt.

4. Verfahren nach wenigstens einem der Ansprüche 2 oder 3, **dadurch gekennzeichnet, dass** von der Steuereinheit (54) zur Beurteilung der Neigung des Untergrunds (94) sensorisch erfasste Neigungsinformationen und/oder Topografieinformationen eines in dem landwirtschaftlichen Traktor (10) fest verbauten bzw. als mobiles Endgerät (80) ausgebildeten Navigationssystems (64) als Bestandteil der Fahrt- und/oder Betriebszustandsinformationen ausgewertet werden.

5. Verfahren nach wenigstens einem der Ansprüche 1 bis 4, **dadurch gekennzeichnet, dass** die Ermittlung des Belegungszustands kann von der Steuereinheit (54) selbsttätig bei Inbetriebnahme des landwirtschaftlichen Traktors (10), bei erkanntem Erreichen eines Vorgewendes während der Feldbearbeitung, periodisch nach Ablauf einer vorgegebenen Zeitspanne und/oder manuell über eine Nutzerschnittstelle (78) initiiert werden.

6. Verfahren nach wenigstens einem der Ansprüche 1 bis 5, **dadurch gekennzeichnet, dass** die Ermittlung der gegenüber dem vorgegebenen Normwert auftretenden Abweichung auf einen zwischen vorgegebener Ausgangs- und Endstellung (84, 86) der Unterlenker (24a, 24b) auftretenden linearen Bereich (88) konstanter Positionsänderungsgeschwindigkeit begrenzt wird.

7. Verfahren nach wenigstens einem der Ansprüche 1 bis 6, **dadurch gekennzeichnet, dass** von der Steuereinheit (54) unter Einbeziehung der als bekannt vorausgesetzten Geometrie bzw. Hebelverhältnisse des Dreipunkt-Krafthebers (14) nach Maßgabe sensorisch bereitgestellter Zugkraftinformationen, die eine an wenigstens einer der beiden unteren Befestigungsstellen (22a, 22b) über die Unterlenker (24a, 24b) ausgebübte Lasteinwirkung wiedergeben, ausgehend von einer darauf beruhenden Abschätzung der Schwerpunktlage eine Kategorisierung des Gewichts eines daran angebrachten Anbau- oder Zusatzgeräts (16) durchgeführt wird.

8. Verfahren nach wenigstens einem der Ansprüche 1 bis 7, **dadurch gekennzeichnet, dass** von der Steuereinheit (54) unter Einbeziehung der als bekannt vorausgesetzten Hebelverhältnisse des Dreipunkt-Krafthebers (14) nach Maßgabe sensorisch bereitgestellter Zugkraftinformationen, die eine an wenigstens einer der beiden unteren Befestigungsstellen (22a, 22b) über die Unterlenker (24a, 24b) ausgebübte Lasteinwirkung wiedergeben, ausgehend von einer darauf beruhenden Abschätzung der Schwerpunktlage in Verbindung mit Informationen hinsichtlich einer aktuellen Oberlenkerlänge eine betragsmäßige Ermittlung des Gewichts des Anbau- oder Zusatzgeräts (16) durchgeführt werden.
